# EUROPÄISCHE PATENTSCHRIFT

(11) **EP 2 497 805 B1**
(45) Veröffentlichungstag und Bekanntmachung des Hinweises auf die Patenterteilung: **09.01.2019**
(21) Anmeldenummer: 12156424.9
(22) Anmeldetag: 22.02.2012
(51) Int. Cl.: C09J 7/21, C09J 7/35

(54) **VERWENDUNG EINES KLEBEBANDES ZUM UMMANTELN VON KABELSÄTZEN**
USE OF AN ADHESIVE TAPE FOR BUNDLING CABLES
UTILISATION D'UN RUBAN ADHÉSIF POUR ENROBER DES FAISCEAUX DE CÂBLES

(30) Priorität: 07.03.2011 DE 102011005200
(43) Veröffentlichungstag der Anmeldung: 12.09.2012
(60) Teilanmeldung: 18208866.6
(73) Patentinhaber: tesa SE, 22848 Norderstedt (DE)
(72) Erfinder: Seitzer, Dennis, 22335 Hamburg (DE); Wienke, Daniel, 22299 Hamburg (DE)

(56) Entgegenhaltungen:
- EP-A1- 2 034 576
- DE-A1- 2 834 940
- DE-A1-102005 013 124
- DE-U1-202007 005 588
- DE-U1-202010 014 239

## Beschreibung

Die Erfindung bezieht sich auf Verwendung eines Klebebandes zum Ummanteln von Kabeln in einem Automobil.

Mit der DE 197 32 958 A1 ist ein Klebeband zum Ummanteln von langgestrecktem Gut wie Kabelsätzen oder Kunststoffprofilen offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, dass sich bei Vorhandensein eines leichten Anpressdruckes auf zwei aufeinander liegenden Klebeschichten unter Auflösung der Grenzflächen und vollständiger Koaleszenz der Klebeschichten eine homogene Haftklebstoff-Masse bildet.

DE 10 2005 013124 A1 offenbart eine axiale Schutzummantelung für Kabelsätze enthaltend einen Polyestergewebeträger, der zumindest auf einer Oberfläche mit zumindest einem Klebestreifen aus einem Schmelzklebstoff beschichtet ist. Es können aber auch mehrere Klebestreifen zugegen sein. Die Breite der Klebestreifen liegt im Bereich von 1-60 % der Gesamtbreite des Trägers. Die DE 28 34 940 A1 offenbart ein wärmeaktivierbares druckempfindliches Klebeband oder - blatt bei dem sich auf einem Trägermaterial eine Schicht aus einem wärmeaktivierbaren, druckempfindlichen Kleber befindet, wodurch eine hohe Abrissfestigkeit und Bindefestigkeit bei Erwärmung nach der Verfestigung erreicht wird.

Des Weiteren umfasst die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, dass mindestens zwei Klebebereiche des bandförmigen Trägers auf der mit der Klebeschicht versehenen Seite derart gegeneinander geklebt werden, dass unter Auflösung von Grenzflächen der Klebeschicht eine homogene Masse entsteht.

Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, dass beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Die DE 100 36 805 A1 offenbart eine Ummantelung zum Ummanteln von langgestrecktem Gut mit einer bevorzugt textilen Eindeckung, bei der auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, dass sich das Klebeband über eine der Längskanten der Eindeckung erstreckt.
In einer ersten vorteilhaften Ausführungsform der Erfindung weist die Ummantelung auf einem im Vergleich zur Breite der Eindeckung schmalen Kantenbereich der Eindeckung ein zweites selbstklebend ausgerüstetes Klebeband auf, das so auf der Eindeckung verklebt ist, dass sich das Klebeband über die andere der beiden Längskanten der Eindeckung erstreckt.
Optimierte Ausführungsformen derselben werden in der EP 1 312 097 A1 offenbart. In der EP 1 300 452 A2, der DE 102 29 527 A1 sowie der WO 2006 108 871 A1 werden ebenfalls Weiterentwicklungen dargestellt.

Soll ein Kabelbaum mit einem Produkt, wie es beispielsweise aus der DE 100 36 805 A1 bekannt ist, ummantelt werden, wird eine der Längskanten des Produkts auf dem Kabelbaum in axialer Richtung fixiert, beispielsweise mit einem Klebestreifen oder einem Klebeband, das Teil des Produkts ist. Anschließend wird das Produkt in einer kreisförmigen Bewegung um den Kabelbaum geführt, so dass der Kabelbaum vom Produkt eingeschlagen wird. Schließlich wird die andere Längskante des Produkts auf dem Kabelbaum fixiert, beispielsweise wieder mittels eines Klebebands. Wenn der Kabelbaum vollständig eingeschlagen ist, erfolgt die Fixierung der zweiten Längskante auf dem Produkt selbst.
Wenn ein verbesserter Schutz des Kabelbaums oder eine bessere Dämpfung desselben gewünscht wird, kann der Kabelbaum auch zweifach eingeschlagen werden, indem das Produkt zweimal kreisförmig um den Kabelbaum geführt wird. Auf diese Weise ergeben sich zwei Lagen des Produkts, die den Kabelbaum ummanteln.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312-1 (10/2009) beschrieben sind.

Die Haupteigenschaften eines in DE 100 36 805 A1 offenbarten Gewebebeziehungsweise Vliesschlauchs lassen sich wie folgt zusammenfassen:
a) Gute Dämpfungseigenschaften, insbesondere mit einem weichen, voluminösen Träger wie ein Vlies als Eindeckung (Klasse C (5 bis 10 dB) bis D (10 bis 15 dB))
b) Hohe Abriebbeständigkeit, insbesondere mit einem dichten, verfestigten Träger wie ein Gewebe als Eindeckung (Klasse D (> 1000 Zyklen))
c) Hohe Temperaturbeständigkeit T3 (125 °C) bis T4 (150 °C)

Nachteilig an den bekannten Ummantelungen ist, dass diese nur eine geringe Verschlussfestigkeit aufweisen, die sich durch teilweises oder vollständiges Öffnen der Ummantelung bei Biege- oder Temperaturbeanspruchung oder auch unter Einfluss von Chemikalien (zum Beispiel Motoröl, Kraftstoff, Waschflüssigkeiten, Salzwasser) offenbart. In den bekannten Ummantelungen werden Selbstklebemassen verwendet, die beim Appliziervorgang beispielsweise durch Staub leicht verschmutzen können, was deren Haftfähigkeit erheblich reduzieren kann
Des Weiteren müssen die bekannten Ummantelungen durch das nicht vollflächige Auflaminieren von Klebebandstreifen auf Eindeckungen hergestellt werden, was aufgrund der komplizierten Prozessregelung sehr aufwändig ist.
Hier gilt es abzuhelfen.

Der vorliegenden Erfindung liegt die Aufgabe zugrunde, ein Klebeband zur Verfügung zu stellen, das das besonders einfache, preiswerte und schnelle Ummanteln von Kabelsätzen in Automobilen ermöglicht und das insbesondere einen sicheren Verschluss der sich bei der Applizierung ergebenden Ummantelung sicherstellt. Gelöst wird diese Aufgabe durch die Verwendung eines Klebebandes zum Ummanteln von Kabeln in einem Automobil, wie sie im Hauptanspruch niedergelegt ist. Gegenstand der Unteransprüche sind dabei vorteilhafte Weiterbildungen ders Verwendung.

Demgemäß betrifft die Erfindung die Verwendung eines Klebebandes zum Ummanteln von Kabeln in einem Automobil, wobei die Kabel in axialer Richtung von dem Klebeband umhüllt werden, bestehend aus einem Träger mit einer Oberseite und einer Unterseite, wobei der Träger bezogen auf die Querrichtung eine Breite B_{T} aufweist, und an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist, wobei eine der Längskanten des Klebebands auf dem Kabelbaum in axialer Richtung ausgerichtet wird, das Klebeband in einer kreisförmigen Bewegung um den Kabelbaum geführt wird, so dass der Kabelbaum vom Klebeband eingeschlagen wird, die andere Längskante des Klebebands durch den Klebestoffstreifen aus reaktivem hitzeaktivierbarem Kleber auf dem Träger fixiert wird, so dass der Klebstoffstreifen im Wesentlichen auf dem Träger verklebt, wobei als Klebstoffstreifen ein reaktiver hitzeaktivierbarer Kleber aus Nitrilkautschuk und Phenolharz eingesetzt wird.

Gemäß einer ersten bevorzugten Ausführungsform sind zwei Klebstoffstreifen vorgesehen, und zwar ein Klebstoffstreifen auf der Oberseite des Trägers und ein Klebstoffstreifen auf der Unterseite des Trägers, wobei die beiden Klebstoffstreifen vorzugsweise an den sich gegenüberliegenden Längskanten angeordnet sind. Gemäß einer Variante sind die beiden Klebstoffstreifen an ein- und derselben Längskante angeordnet.

Vorzugsweise schließen der oder die Klebestoffstreifen jeweils bündig mit der oder den Längskanten des Trägers ab.
Der oder die Klebstoffstreifen können auch mit einem Versatz mit einer Breite B_{VS} von bis zu 5 mm in Querrichtung auf dem Träger aufgebracht werden. Der Versatz ist vorteilhafterweise schmaler als der Klebstoffstreifen selbst.

Gemäß einer besonders vorteilhaften Ausführungsform des Klebebands ist auf der Unterseite des Träger an einer Längskante des Trägers der Klebstoffstreifen aus einem reaktiven hitzeaktivierbaren Kleber vorgesehen und auf der Unterseite des Träger an der anderen Längskante des Trägers ein selbstklebender Streifen vorhanden.
Dieser selbstklebende Streifen dient zur Fixierung des Klebebands während des Wickelvorgangs.
Der selbstklebende Streifen kann aus Streifen aus reiner Klebemasse bestehen. Er kann auch aus einem doppelseitig selbstklebenden Klebeband bestehen.
Die Breite oder die Dicke des Streifens können der Breite B_{K} des Klebstoffstreifens entsprechen.

Die Breite B_{K} der Klebstoffstreifen beträgt vorzugsweise mindestens 10 mm, weiter vorzugsweise mindestens 15 mm und/oder vorzugsweise maximal höchstens 25 % der Breite B_{T}, weiter vorzugsweise höchstens 10 % der Breite B_{T}.
Weiter vorzugsweise beträgt Breite B_{K} der Klebstoffstreifen zwischen 5 und 40 mm, weiter vorzugsweise zwischen 10 und 30 mm.

Der oder die Klebstoffstreifen weisen gemäß einer weiteren vorteilhaften Ausführungsform der Erfindung eine Dicke von 40 bis 300 µm, vorzugsweise 60 bis 200 µm, weiter vorzugsweise 60 bis 140 µm auf.

Die Breite B_{T} des Trägers liegt vorzugsweise zwischen 20 und 200 mm, weiter vorzugsweise zwischen 40 bis 130 mm.
Sodann ist es vorteilhaft, wenn der Träger ein Flächengewicht von 30 bis 250 g/m², vorzugsweise 50 bis 200 g/m², weiter vorzugsweise 60 bis 150 g/m² aufweist.

Im Folgenden werden für einige Ausführungsformen der Erfindung bevorzugte Parameterkombinationen angegeben, ohne die Erfindung damit einschränken zu wollen.

Bei einem Träger auf Gewebebasis weisen Träger und Klebstoffstreifen vorzugsweise die folgenden Werte auf:
- Flächengewicht Träger: 50 bis 200 g/m², bevorzugt 50 bis 150 g/m²
- Dicke Klebstoffstreifen: 40 bis 200 µm, bevorzugt 60 bis 140 µm
- Breite B_{K} des Klebstoffstreifens: 5 bis 40 mm, bevorzugt 10 bis 30 mm

Bei einem Träger auf Vliesbasis weisen Träger und Klebstoffstreifen vorzugsweise die folgenden Werte auf:
- Flächengewicht Träger: 30 bis 250 g/m², bevorzugt 45 bis 200 g/m², weiter bevorzugt 60 bis 200 g/m²
- Dicke Klebstoffstreifen: 60 bis 300 µm, bevorzugt 120 bis 280 µm
- Breite B_{K} des Klebstoffstreifens: 5 bis 40 mm, bevorzugt 10 bis 30 mm

Bei einem Träger auf Gewirkebasis weisen Träger und Klebstoffstreifen vorzugsweise die folgenden Werte auf:
- Flächengewicht Träger: 50 bis 250 g/m², bevorzugt 50 bis 200 g/m²
- Dicke Klebstoffstreifen: 40 bis 200 µm, bevorzugt 60 bis 140 µm
- Breite B_{K} des Klebstoffstreifens: 5 bis 40 mm, bevorzugt 10 bis 30 mm

Bei den genannten Werten resultieren die als bevorzugt beanspruchten Durchmesser des sich aus dem Klebeband ergebenden Schlauches von 5 bis 50 mm, weiter bevorzugt 10 bis 30 mm.

Besonders vorteilhaft ist ein Klebeband, bei dem als Träger ein Gewebe, ein Vlies oder ein Gewirke eingesetzt wird und/oder als Klebstoffstreifen ein reaktiver hitzeaktivierbarer Kleber aus Nitrilkautschuk und Phenolharz.
Klebebänder mit derartigen Trägern lassen sich relativ problemlos von Hand einreißen, was für den beschriebenen Einsatzzweck und die besonders bevorzugte Verarbeitung als Wickelband zur Bündelung von Kabeln in Automobilen ebenfalls von besonderer Bedeutung ist.
Eine Reißfestigkeit in Querrichtung von weniger als 10 N, welche nach der AFERA-Norm 4007 bestimmt wird, dient als Kriterium für die Handeinreißbarkeit des Klebebandes. Lediglich bei sehr hohen Flächengewichten oder Dicken der eingesetzten Träger kann die Handeinreißbarkeit nicht oder nur eingeschränkt gegeben sein. In diesem Fall können aber Perforationen vorhanden sein, um die Handeinreißbarkeit zu optimieren.

Als Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder aus Fäden aus natürlichen Rohstoffe bestehen.

Bevorzugt wird als Material für den Träger Polyester aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Zur Ummantelung des langgestreckten Gutes eignet sich auch ein Träger, der aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Als Klebemassen finden reaktive hitzeaktivierbare Klebemassen Verwendung.
Diese besitzen eine sehr gute Dimensionsstabilität, wenn die elastomere Komponente eine hohe Elastizität aufweist. Weiterhin bedingen die Reaktivharze, dass eine Vernetzungsreaktion eintreten kann, die die Verklebungsfestigkeit deutlich erhöht. So lassen sich zum Beispiel hitzeaktivierbare Klebemassen auf Basis von Nitrilkautschuken und Phenolharzen einsetzen, zum Beispiel kommerziell erhältlich im Produkt 8401 der Firma tesa.

Als Nitrilkautschuke können in erfindungsgemäßen Klebmassen insbesondere alle Acrylnitril-Butadien-Copolymere zum Einsatz kommen mit einem Acrylnitrilgehalt von 15 bis 50 Gew.-%. Ebenso sind auch Copolymere aus Acrylnitril, Butadien und Isopren einsetzbar. Dabei ist der Anteil von 1,2-verknüpftem Butadien variabel. Die vorgenannten Polymere können zu einem unterschiedlichen Grad hydriert sein auch vollständig hydrierte Polymere mit einem Doppelbindungsanteil von unter 1 % sind nutzbar.

Alle diese Nitrilkautschuke sind zu einem gewissen Grad carboxyliert, bevorzugt liegt der Anteil der Säuregruppen bei 2 bis 15 Gew.-%. Kommerziell sind solche Systeme zum Beispiel unter dem Namen Nipol 1072 oder Nipol NX 775 der Firma Zeon erhältlich. Hydrierte carboxylierte Nitrilkautschuke sind unter dem Namen Therban XT VP KA 8889 von der Firma Lanxess kommerzialisiert.

Um die Adhäsion zu erhöhen, ist auch der Zusatz von mit den Nitrilkautschuken verträglichen Klebharzen möglich.

Weiterhin lassen sich als Reaktivharze auch Terpenphenolharze wie zum Beispiel NIREZ™ 2019 von Arizona Chemical einsetzen.

Weiterhin lassen sich als Reaktivharze auch Phenolharze wie zum Beispiel YP 50 von Toto Kasei, PKHC von Union Carbide Corp. und BKR 2620 von Showa Union Gosei Corp. einsetzen.
Weiterhin lassen sich als Reaktivharze auch Phenolresolharze auch in Kombination mit anderen Phenolharzen einsetzen.

In einer vorteilhaften Ausführung der erfindungsgemäßen Klebemasse auf Basis Nitrilkautschuk sind außerdem klebkraftsteigernde (klebrigmachende) Harze zugesetzt; sehr vorteilhaft zu einem Anteil von bis zu 30 Gew.-%, bezogen auf die Klebemasse.

Als zuzusetzende klebrigmachende Harze sind ausnahmslos alle vorbekannten und in der Literatur beschriebenen Klebharze einsetzbar. Bevorzugt geeignet sind unter anderem nicht hydrierte, partiell- oder vollständig hydrierte Harze auf Basis von Inden, Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen oder hydrierte Polymerisate von bevorzugt reinen C₈- und C₉-Aromaten.
Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polymer kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Neben den schon genannten säure- oder säureanhydridmodifizierten Nitrilkautschuken können auch noch weitere Elastomere eingesetzt werden. Neben weiteren säure- oder säureanhydridmodifizierten Elastomeren können auch nicht modifizierte Elastomere zum Einsatz kommen wie zum Beispiel Polyvinylalkohol, Polyvinylacetat, Styrolblockcopolymere, Polyvinylformal, Polyvinylbutyral oder lösliche Polyester.
Auch Copolymere mit Maleinsäureanhydrid wie zum Beispiel ein Copolymer aus Polyvinylmethylether und Maleinsäureanhydrid, zum Beispiel zu beziehen unter dem Namen Gantrez™, vertrieben von der Firma ISP, sind einsetzbar.

Durch die chemische Vernetzung der Harze mit den Elastomeren werden sehr große Festigkeiten innerhalb der Klebemasse erreicht.

Als weitere Additive können typischerweise genutzt werden:
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Füllstoffe wie zum Beispiel Siliziumdioxid, Glas (gemahlen oder in Form von Kugeln), Aluminiumoxide, Zinkoxide, Calciumcarbonate, Titandioxide, Ruße, Metallpulver, etc.
- Farbpigmente und Farbstoffe sowie optische Aufheller

Durch den Einsatz von Weichmachern kann die Elastizität der vernetzten Klebmasse erhöht werden. Als Weichmacher können dabei zum Beispiel niedermolekulare Polyisoprene, Polybutadiene, Polyisobutylene oder Polyethylenglykole und Polypropylenglykole eingesetzt werden oder Weichmacher auf Basis Polyethylenoxiden, Phosphatestern, aliphatischen Carbonsäureestern und Benzoesäureestern. Weiterhin lassen sich auch aromatische Carbonsäureester, höhermolekulare Diole, Sulfonamide und Adipinsäureester einsetzen.

Da die eingesetzten Nitrilkautschuke auch bei hohen Temperaturen keine zu niedrige Viskosität besitzen, kommt es während des Verklebens und Heißpressens nicht zum Austritt der Klebmasse aus der Klebfuge. Während dieses Vorgangs vernetzen die Epoxidharze mit den Elastomeren, es ergibt sich ein dreidimensionales Netzwerk.

Durch die Zugabe von so genannten Beschleunigern kann die Reaktionsgeschwindigkeit weiter erhöht werden.
Beschleuniger können zum Beispiel sein:
- tertiäre Amine wie Benzyldimethylamin, Dimethylaminomethylphenol, Tris(dimethylaminomethyl)phenol
- Bortrihalogenid-Amin-Komplexe
- substituierte Imidazole
- Triphenylphosphin
Als Beschleuniger eignen sich zum Beispiel Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze.

Weiterhin können optional Füllstoffe (zum Beispiel Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und Thermoplaste, Compoundierungsmittel und/oder Alterungsschutzmittel, zum Beispiel in Form von primären und sekundären Antioxidantien oder in Form von Lichtschutzmitteln zugesetzt sein.

In einer weiteren bevorzugten Ausführungsform werden der Klebemasse weitere Additive hinzugesetzt, wie zum Beispiel Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke, Styrol-Butadien Kautschuke.
Polyvinylbutyrale sind unter Butvar™ von Solucia, unter Pioloform™ von Wacker und unter Mowital™ von Kuraray erhältlich. Polyacrylat-Kautschuke sind unter Nipol AR™ von Zeon erhältlich. Chloropren-Kautschuke sind unter Baypren™ von Bayer erhältlich. Ethylen-Propylen-Dien-Kautschuke sind unter Keltan™ von DSM, unter Vistalon™ von Exxon Mobile und unter Buna EP™ von Bayer erhältlich. Methyl-Vinyl-Silikon-Kautschuke sind unter Silastic™ von Dow Corning und unter Silopren™ von GE Silicones erhältlich. Fluorsilikon-Kautschuke sind unter Silastic™ von GE Silicones erhältlich. ButylKautschuke sind unter Esso Butyl™ von Exxon Mobile erhältlich. Styrol-Butadien-Kautschuke sind unter Buna S™ von Bayer, und Europrene™ von Eni Chem und unter Polysar S™ von Bayer erhältlich.
Polyvinylformale sind unter Formvar™ von Ladd Research erhältlich.

In einer weiteren bevorzugten Ausführungsform werden der Klebemasse weitere Additive hinzugesetzt, wie zum Beispiel thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie zum Beispiel Polytetrafluorethylen, Polyamide, Ethylenvinylacetate, Polyvinylacetate, Polyimide, Polyether, Copolyamide, Copolyester, Polyolefine wie zum Beispiel Polyethylen, Polypropylen, Polybuten, Polyisobuten und Poly(metha)crylate.

Die Klebkraft der hitzeaktivierbaren Klebemasse kann durch weitere gezielte Additivierung gesteigert werden. So lassen sich zum Beispiel Polyimin- oder Polyvinylacetat-Copolymere auch als klebkraftfördernde Zusätze verwenden.

Zur Herstellung des Klebestreifens werden die Bestandteile der Klebmasse in einem geeigneten Lösungsmittel, zum Beispiel Butanon, gelöst und auf ein flexibles Substrat, das mit einer Releaseschicht versehen ist, zum Beispiel einem Trennpapier oder einer Trennfolie, beschichtet und getrocknet, so dass die Masse von dem Substrat leicht wieder entfernt werden kann. Nach entsprechender Konfektionierung können Stanzlinge, Rollen oder sonstige Formkörper bei Raumtemperatur hergestellt werden. Entsprechende Formkörper werden dann vorzugsweise bei erhöhter Temperatur auf den Träger aufgeklebt.
Die zugemischten Epoxidharze gehen bei der Laminiertemperatur noch keine chemische Reaktion ein, sondern erst reagieren erst bei der Herstellung der Ummantelung aus dem erfindungsgemäßen Klebeband mit den Säure- oder Säureanhydridgruppen reagieren. Bevorzugt vernetzt der Kleber bei Temperaturen über 150 °C

Schließlich umfasst die Erfindung einen mit einem erfindungsgemäßen Klebeband ummanteltens Kabelsatz.
Die Umhüllung des Gutes mit dem Klebeband erfolgt dabei so, dass der Klebstoffstreifen im Wesentlichen auf dem Träger verklebt.
Hierzu wird eine der Längskanten des Klebebands auf dem Kabelbaum in axialer Richtung ausgerichtet, vorzugsweise durch den erfindungsgemäß vorgesehenen selbstklebenden Streifen fixiert, beispielsweise aus einem doppelseitig klebenden Klebeband. Anschließend wird das Klebeband in einer kreisförmigen Bewegung um den Kabelbaum geführt, so dass der Kabelbaum vom Klebeband eingeschlagen wird. Schließlich wird die andere Längskante des Klebebands durch den Klebestoffstreifen aus reaktivem hitzeaktivierbarem Kleber auf dem Träger fixiert.
Wenn ein verbesserter Schutz des Kabelbaums oder eine bessere Dämpfung desselben gewünscht wird, kann der Kabelbaum auch zweifach eingeschlagen werden, indem das Klebeband zweimal kreisförmig um den Kabelbaum geführt wird. Auf diese Weise ergeben sich zwei Lagen des Produkts, die den Kabelbaum ummanteln.

In einer Variante kann aus dem Klebeband in der angegebenen Art und Weise ein Schlauch vorgefertigt werden, der anschließend über die Enden eines Kabelstrangs gestülpt wird

Das erfindungsgemäße Klebeband kann in festen Längen wie zum Beispiel als Meterware oder aber als Endlosware auf Rollen (archimedische Spirale) zur Verfügung gestellt werden. Für die Verwendung ist im letzteren Fall dann ein variables Ablängen durch Messer, Scheren oder Dispenser u.ä. möglich oder aber bei geeigneter Wahl der Materialien eine manuelle Verarbeitbarkeit ohne Hilfsmittel.

Des Weiteren kann das Klebeband im Wesentlichen rechtwinklig zur Laufrichtung ein oder mehrere Schwächungslinien aufweisen, so dass das Klebeband leichter handeinreißbar ist.
Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet.
Besonders einfach lässt das Klebeband durchtrennen, wenn die Schwächungslinien in Form von Perforationen ausgestaltet sind.

Es lassen sich auf diese Weise Kanten zwischen den einzelnen Abschnitten erzielen, die sehr fusselfrei sind, also ein unerwünschtes Ausfransen vermieden wird.
Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.
Die Höhe der Stachel beziehungsweise Messer auf den Stanzwalzen beträgt bevorzugt 150 % der Dicke des Klebebands.
Das Loch-Steg-Verhältnis bei der Perforierung, also wie viele Millimeter halten das Material zusammen ("Brücke"), wie viele Millimeter sind durchtrennt, bestimmt, wie leicht insbesondere die Fasern des Trägermaterials einzureißen sind. Des Weiteren beeinflusst dies Verhältnis letztlich auch, wie fusselfrei die Abrisskante zu erhalten ist.
Vorzugsweise beträgt die Stegbreite ungefähr 2 mm und die Schnittbreite zwischen den Stegen ungefähr 10 mm, das heißt, es wechseln sich 2 mm breite Stege mit 10 mm Einschnitten ab. Das Loch-Steg-Verhältnis beträgt demgemäß vorzugsweise 2:10.
Mit dieser Schwächung des Materials lässt sich eine ausreichend geringe Abreißkraft erzielen.
Das Klebeband kann klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Der Klebstoffstreifen wird vorzugsweise auf dem Träger bei Temperaturen von 90 °C bis 110 °C und einem Druck von 0,2*10⁵ Pa oder, vorzugsweise 0,2 bis 0,5 *10⁵ Pa auflaminiert.
Der reaktive hitzeaktivierbare Streifen baut auf diese Weise eine geringe Adhäsion auf, die zur Fixierung reicht. Aufgrund der geringen Temperaturen und des geringen Drucks erfolgt aber noch keine vollständige Aushärtung des Klebers.

Diese erfolgt dann nach der Ummantelung des Gutes mit dem Klebeband, vorzugsweise bei mindestens 180 °C und bei einem Druck von 2 *10⁵ Pa oder mehr für eine Dauer von mindestens 1 Minute. Dem Fachmann ist bekannt, dass die Dauer mit höherem Druck und/oder höherer Temperatur sinken kann.

Durch die erfinderische Ummantelung des bevorzugten Kabelbaums ist dieser hervorragend geschützt und gegen Erschütterungen gedämpft. Das Klebeband ist leicht, so dass der Kabelbaum nicht sehr an Gewicht zulegt, insbesondere im Vergleich zu den herkömmlichen Methoden der Ummantelung, nämlich ein Klebeband spiralförmig um die gebündelten Kabel zu wickeln, und dehnfähig, so dass der Kabelbaum insgesamt verformbar ist. Er kann somit in schwierigen Lagen den zur Verfügung stehenden Platzverhältnissen hervorragend angepasst werden.
Diese erhöhte Flexibilität ist auch darauf zurückzuführen, dass der erfindungsgemäß vorgesehene Streifen Klebemasse im Vergleich zu den bisher verwendeten Klebebändern sehr schmal ist.

Aufgrund der sehr hohen Klebkraft der hitzeaktivierbaren Klebemasse (5 bis 50 N/cm) ist die Ummantelung sehr viel sicherer verschlossen, als es bisher mit den selbstklebend ausgerüsteten Klebebändern der Fall war. Auch bei starker mechanischer Beanspruchung ist kein Öffnen des Schlauches zu beobachten, weil die erfindungsgemäß eingesetzten Klebemassen zusätzlich eine sehr hohe Kohäsion aufweisen.

Die Ummantelung weist eine exzellente Temperaturbeständigkeit bis weit über die maximale Produktanforderung von T4 (3000 h, 150 °C) auf und eine exzellente Chemikalienbeständigkeit auch bei hohen Temperaturen auf.

Es vermindern sich die Probleme in der Verträglichkeit zwischen Klebemasse und Kabelummantelung, wie sie insbesondere bei PVC-freien Kabeln und nicht speziell geeigneten Klebemassen auftreten können, da bei der erfindungsgemäßen Längsummantelung keine oder nur eine minimale Kontaktfläche Klebemasse zu Kabelisolierung auftritt.

Die erfindungsgemäße Lösung hat zusammengefasst die Vorteile, dass es sich um einen sauberen, fähnchenfreien Kabelbaum handelt, welcher einen guten Oberflächenschutz bietet, hohe Bündelungskraft, gute Geräuschdämpfung und bei dicken Kabelsätzen eine sehr hohe Verformbarkeit in Querschnittsrichtung gewährleistet, so dass das beschriebene Klebeband insbesondere für die beschriebenen automobilen Anwendungen, und zwar im gesamten Fahrzeug, eingesetzt werden kann.

Im Folgenden soll die Erfindung anhand mehrerer Figuren sowie eines Beispiels näher erläutert werden, ohne damit die Erfindung unnötig einschränken zu wollen.

Es zeigen
- Figur 1: ein erfindungsgemäßes Klebeband mit einem Klebstoffstreifen,
- Figur 2: ein erfindungsgemäßes Klebeband mit einem Klebstoffstreifen, der mit Versatz aufgebracht ist,
- Figur 3: ein drittes erfindungsgemäßes Klebeband mit zwei Klebstoffstreifen,
- Figur 4: das mit dem erfindungsgemäßen Klebeband aus Figur 1 ummantelte Gut und
- Figur 5: ein viertes erfindungsgemäßes Klebeband.

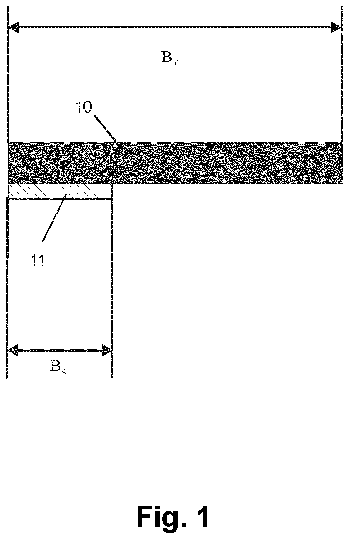

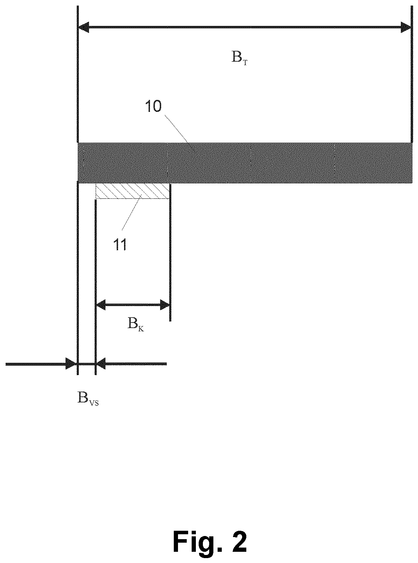

In der Figur 1 ist im Querschnitt ein erfindungsgemäßes Klebeband mit einem Träger 10, der eine Breite B_{T} (beispielsweise 45 mm) aufweist. Auf der Unterseite des Trägers 10 ist ein Klebstoffstreifen B_{K} vorhanden mit einer Breite B_{K} von 15 mm und somit von ungefähr 33 % der Breite B_{T}.
Im Gegensatz zu dem Klebeband aus der Figur 2, in der der Streifen mit einem Versatz mit einer Breite B_{VS} aufgebracht ist, schließt der Klebestreifen 11 bündig mit der Längskante des Trägers 10 ab.

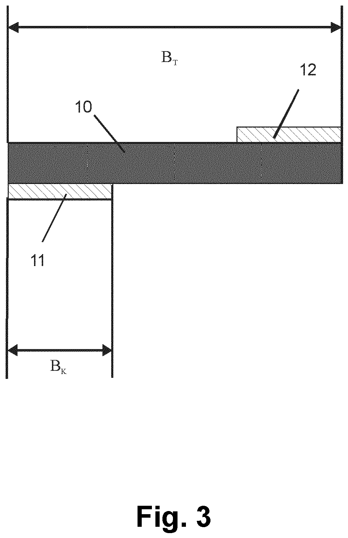

Die Figur 3 zeigt ein drittes erfindungsgemäßes Klebeband mit zwei Klebstoffstreifen 11, 12. An der Unterseite des Trägers 10 ist ein erster Klebstoffstreifen 11 vorhanden, ein zweiter Klebestoffstreifen 12 an der Oberseite des Trägers 10. Die Klebstoffstreifen 11, 12 verlaufen in Längsrichtung des Trägers 10, auch Maschinenrichtung genannt und schließen beide bündig mit den Längskanten des Trägers 10 ab.

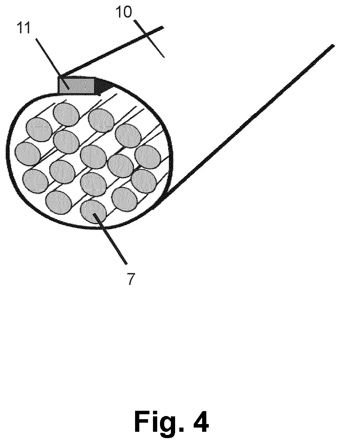

Figur 4 zeigt das mit dem erfindungsgemäßen Klebeband aus Figur 1 ummantelte Gut, hier Kabel 7 für einen Kabelbaum im Automobilbereich.
Die Umhüllung der Kabel 7 mit dem Klebeband erfolgt so, dass der Klebestreifen 11 auf dem klebestreifenfreien Ende des Trägers 10 liegt. Anschließend werden der entsprechende Druck beziehungsweise die entsprechende Temperatur aufgebracht, so dass der reaktive hitzeaktvierbare Klebestoffstreifen aushärtet.

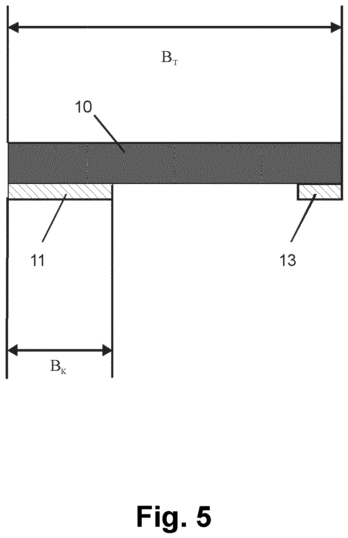

In der Figur 5 ist das Klebeband aus Figur 1 dargestellt, das zusätzlich einen selbstklebenden Streifen 13 aufweist, der zur Fixierung der Längskante des Klebebands auf dem Gut beim Umwickeln des Gutes dient.

### Beispiel

| | |
|---|---|
| Träger: | 45 mm breites Gewebe PET, Leinwandbindung, 130 g/m² |
| Klebstoffstreifen: | bündig mit der Längskante des Trägers abschließend 10 mm Breite, 125 µm Massedicke |
| | Hitzeaktivierbarer Kleber auf Basis von Nitrilkautschuk und Phenolharz |

| Wesentliche Merkmale: | |
|---|---|
| Verschlussfestigkeit (Klebkraft): | 8 N/cm |
| Temperaturklasse (nach Ford und LV312-1): | T4 |

### Prüfung der Klebkraft

Ein Klebstoffstreifen des zu untersuchenden Klebstoffs wird in einer Breite von 20 mm auf einen Gewebestreifen (Leinwandbindung, 130 g/m²) bei einer Temperatur von ca. 100 °C unter leichtem Druck aufgebracht. Darauf wird ein zweiter Streifen desselben Gewebes unter Druck auflaminiert, und zwar mit 180 °C und mit mindestens 2*10⁵ Pa für eine Minute. Das entstehende Laminat weist eine Länge von 150 mm auf. Die Lamination erfolgt derart, dass jeweils ein klebestofffreies Ende an jedem Gewebestreifen verbleibt. Zur Konditionierung werden die Prüflinge mindestens eine Stunde im Klimaraum gelagert, bevor die Prüfung erfolgt.

Die freien Enden werden anschließend in eine Zugprüfmaschine eingespannt. Unter einem Schälwinkel von 180° mit einer Geschwindigkeit von 300 mm/min werden die Enden und somit das Laminat auseinandergezogen, und die dafür notwendige Kraft ermittelt. Geprüft wird über eine Abzugsstrecke von 100 mm (entspricht 200mm Weglänge der Klemmbacke). Die Messergebnisse sind in N/cm angegeben und über drei Messungen gemittelt. Alle Messungen werden in einem klimatisierten Raum bei 23 °C und 50 % relativer Luftfeuchte durchgeführt.

## Patentansprüche

1. Verwendung eines Klebebandes zum Ummanteln von Kabeln in einem Automobil, wobei die Kabel in axialer Richtung von dem Klebeband umhüllt werden, bestehend aus einem Träger mit einer Oberseite und einer Unterseite, wobei der Träger bezogen auf die Querrichtung eine Breite B_{T} aufweist, wobei an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist, wobei eine der Längskanten des Klebebands auf dem Kabelbaum in axialer Richtung ausgerichtet wird,
das Klebeband in einer kreisförmigen Bewegung um den Kabelbaum geführt wird, so dass der Kabelbaum vom Klebeband eingeschlagen wird,
die andere Längskante des Klebebands durch den Klebestoffstreifen aus reaktivem hitzeaktivierbarem Kleber auf dem Träger fixiert wird, so dass der Klebstoffstreifen im Wesentlichen auf dem Träger verklebt,
wobei als Klebstoffstreifen ein reaktiver hitzeaktivierbarer Kleber aus Nitrilkautschuk und Phenolharz eingesetzt wird.

2. Verwendung eines Klebebands nach Anspruch 1,
**dadurch gekennzeichnet, dass**
zwei Klebstoffstreifen vorgesehen sind, und zwar ein Klebstoffstreifen auf der Oberseite des Trägers und ein Klebstoffstreifen auf der Unterseite des Trägers, wobei die beiden Klebstoffstreifen vorzugsweise an den sich gegenüberliegenden Längskanten angeordnet sind.

3. Verwendung eines Klebebands nach Anspruch 1 oder 2,
**dadurch gekennzeichnet, dass**
der oder die Klebestoffstreifen jeweils bündig mit der oder den Längskanten des Trägers abschließen.

4. Verwendung eines Klebebands nach zumindest einem der Ansprüche 1 bis 3,
**dadurch gekennzeichnet, dass**
auf der Unterseite des Träger an einer Längskante des Trägers der Klebstoffstreifen aus einem reaktiven hitzeaktivierbaren Kleber vorgesehen ist und auf der Unterseite des Träger an der anderen Längskante des Trägers ein selbstklebender Streifen vorhanden ist.

5. Verwendung eines Klebebands nach zumindest einem der vorherigen Ansprüche,
**dadurch gekennzeichnet, dass**
die Breite B_{K} der Klebstoffstreifen mindestens 10 mm, vorzugsweise mindestens 15 mm und/oder maximal höchstens 25 % der Breite B_{T}, vorzugsweise höchstens 10 % der Breite B_{T} beträgt.

6. Verwendung eines Klebebands nach zumindest einem der vorherigen Ansprüche,
**dadurch gekennzeichnet, dass**
die Breite B_{K} der Klebstoffstreifen zwischen 5 und 40 mm, vorzugsweise zwischen 10 und 30 mm beträgt.

7. Verwendung eines Klebebands nach zumindest einem der vorherigen Ansprüche,
**dadurch gekennzeichnet, dass**
der oder die Klebstoffstreifen eine Dicke von 40 bis 300 µm, vorzugsweise 60 bis 200 µm, weiter vorzugsweise 60 bis 140 µm aufweisen.

8. Verwendung eines Klebebands nach zumindest einem der Ansprüche 1 bis 4, 6 oder 7,
**dadurch gekennzeichnet, dass**
die Breite B_{T} des Trägers zwischen 20 und 200 mm, vorzugsweise zwischen 40 bis 130 mm beträgt.

9. Verwendung eines Klebebands ach zumindest einem der vorherigen Ansprüche,
**dadurch gekennzeichnet, dass**
der Träger ein Flächengewicht von 30 bis 250 g/m², vorzugsweise 50 bis 200 g/m², weiter vorzugsweise 60 bis 150 g/m² aufweist.

10. Verwendung eines Klebebands nach zumindest einem der vorherigen Ansprüche,
**dadurch gekennzeichnet, dass**
als Träger ein Gewebe, ein Vlies oder ein Gewirke eingesetzt wird.

11. Kabelsatz, in axialer Richtung ummantelt mit einem Klebeband bestehend aus einem Träger mit einer Oberseite und einer Unterseite, wobei der Träger bezogen auf die Querrichtung eine Breite B_{T} aufweist, wobei an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist, wobei eine der Längskanten des Klebebands auf dem Kabelbaum in axialer Richtung ausgerichtet ist,
das Klebeband in einer kreisförmigen Bewegung um den Kabelbaum geführt ist, so dass der Kabelbaum vom Klebeband eingeschlagen ist,
die andere Längskante des Klebebands durch den Klebestoffstreifen aus reaktivem hitzeaktivierbarem Kleber auf dem Träger fixiert ist, so dass der Klebstoffstreifen im Wesentlichen auf dem Träger verklebt,
wobei als Klebstoffstreifen ein reaktiver hitzeaktivierbarer Kleber aus Nitrilkautschuk und Phenolharz eingesetzt ist.

## Claims

1. Use of an adhesive tape for bundling cables in an automobile, the cables being sheathed in the axial direction by the adhesive tape, consisting of a carrier with an upper side and an underside, wherein the carrier has a width B_{T} with respect to the transverse direction, wherein an adhesive strip of a reactive heat-activatable adhesive, which has a width B_{K} of at least 3 mm and at most 50% of the width B_{T}, is provided at at least one longitudinal edge of the carrier,
wherein one of the longitudinal edges of the adhesive tape is aligned in the axial direction on the cable harness,
the adhesive tape is passed in a circular motion around the cable harness, so that the cable harness is wrapped by the adhesive tape,
the other longitudinal edge of the adhesive tape is fixed on the carrier by the adhesive strip of reactive heat-activatable adhesive, so that the adhesive strip is essentially adhesively bonded on the carrier, wherein a reactive heat-activatable adhesive of nitrile rubber and phenolic resin is used as the adhesive strip.

2. Use of an adhesive tape according to Claim 1,
**characterized in that**
two adhesive strips are provided, to be precise one adhesive strip on the upper side of the carrier and one adhesive strip on the underside of the carrier, wherein the two adhesive strips are preferably arranged at the longitudinal edges opposite one another.

3. Use of an adhesive tape according to Claim 1 or 2,
**characterized in that**
the adhesive strip or strips respectively ends or end flush with the longitudinal edge or edges of the carrier.

4. Use of an adhesive tape according to at least one of Claims 1 to 3,
**characterized in that**
the adhesive strip of a reactive heat-activatable adhesive is provided on the underside of the carrier at one longitudinal edge of the carrier and a self-adhesive strip is present on the underside of the carrier at the other longitudinal edge of the carrier.

5. Use of an adhesive tape according to at least one of the preceding claims,
**characterized in that**
the width B_{K} of the adhesive strips is at least 10 mm, preferably at least 15 mm and/or as a maximum at most 25% of the width B_{T}, preferably at most 10% of the width B_{T}.

6. Use of an adhesive tape according to at least one of the preceding claims,
**characterized in that**
the width B_{K} of the adhesive strips is between 5 and 40 mm, preferably between 10 and 30 mm.

7. Use of an adhesive tape according to at least one of the preceding claims,
**characterized in that**
the adhesive strip or strips has or have a thickness of 40 to 300 µm, preferably 60 to 200 µm, more preferably 60 to 140 µm.

8. Use of an adhesive tape according to at least one of Claims 1 to 4, 6 or 7,
**characterized in that**
the width B_{T} of the carrier is between 20 and 200 mm, preferably between 40 and 130 mm.

9. Use of an adhesive tape according to at least one of the preceding claims,
**characterized in that**
the carrier has a basis weight of 30 to 250 g/m², preferably 50 to 200 g/m², more preferably 60 to 150 g/m².

10. Use of an adhesive tape according to at least one of the preceding claims,
**characterized in that**
a woven, nonwoven or knitted fabric is used as the carrier.

11. Cable set, bundled in the axial direction with an adhesive tape consisting of a carrier with an upper side and an underside, wherein the carrier has a width B_{T} with respect to the transverse direction, wherein an adhesive strip of a reactive heat-activatable adhesive, which has a width B_{K} of at least 3 mm and at most 50% of the width B_{T}, is provided at at least one longitudinal edge of the carrier,
wherein one of the longitudinal edges of the adhesive tape has been aligned in the axial direction on the cable harness,
the adhesive tape has been passed in a circular motion around the cable harness, so that the cable harness is wrapped by the adhesive tape,
the other longitudinal edge of the adhesive tape has been fixed on the carrier by the adhesive strip of reactive heat-activatable adhesive, so that the adhesive strip is essentially adhesively bonded on the carrier,
wherein a reactive heat-activatable adhesive of nitrile rubber and phenolic resin has been used as the adhesive strip.

## Revendications

1. Utilisation d'un ruban adhésif pour envelopper des câbles dans une automobile, les câbles étant enveloppés par le ruban adhésif dans la direction axiale et comprenant un support pourvu d'une face supérieure et d'une face inférieure, le support ayant une largeur B_{T} par rapport à la direction transversale, une bande adhésive étant pourvue, sur au moins un bord longitudinal du support, d'un adhésif réactif activable à la chaleur et ayant une largeur B_{K} égale au moins à 3 mm et au plus à 50 % de la largeur B_{T}, l'un des bords longitudinaux du ruban adhésif étant aligné sur le faisceau de câbles dans la direction axiale,
le ruban adhésif étant guidé suivant un mouvement circulaire autour du faisceau de câbles de sorte que le faisceau de câbles est recouvert par le ruban adhésif, l'autre bord longitudinal du ruban adhésif étant fixé au support par la bande adhésive comprenant un adhésif réactif activable à la chaleur de sorte que la bande adhésive adhère sensiblement au support,
un adhésif réactif activable à la chaleur, qui comprend du caoutchouc nitrile et de la résine phénolique, étant utilisé comme bande adhésive.

2. Utilisation d'un ruban adhésif selon la revendication 1, **caractérisée en ce que**
il est prévu deux bandes adhésives, à savoir une bande adhésive sur la face supérieure du support et une bande adhésive sur la face inférieure du support, les deux bandes adhésives étant de préférence disposées au niveau des bords longitudinaux opposés.

3. Utilisation d'un ruban adhésif selon la revendication 1 ou 2, **caractérisée en ce que**
la ou les bandes adhésives affleurent respectivement le ou les bords longitudinaux du support.

4. Utilisation d'un ruban adhésif selon l'une au moins des revendications 1 à 3, **caractérisée en ce que**
la bande adhésive est pourvue d'un adhésif réactif activable à la chaleur au niveau d'un bord longitudinal du support sur la face inférieure du support et une bande auto-adhésive est présente au niveau de l'autre bord longitudinal du support sur la face inférieure du support.

5. Utilisation d'un ruban adhésif selon l'une au moins des revendications précédentes, **caractérisée en ce que**
la largeur B_{K} de la bande adhésive est égale au moins à 10 mm, de préférence au moins à 15 mm et/ou au plus à 25% de la largeur B_{T}, de préférence au plus à 10 % de la largeur B_{T}.

6. Utilisation d'un ruban adhésif selon l'une au moins des revendications précédentes, **caractérisée en ce que**
la largeur B_{K} de la bande adhésive est comprise entre 5 et 40 mm, de préférence entre 10 et 30 mm.

7. Utilisation d'un ruban adhésif selon l'une au moins des revendications précédentes, **caractérisée en ce que**
l'au moins une bande adhésive a une épaisseur de 40 à 300 µm, de préférence de 60 à 200 µm, plus préférablement de 60 à 140 µm.

8. Utilisation d'un ruban adhésif selon l'une au moins des revendications 1 à 4, 6 ou 7, **caractérisée en ce que**
la largeur B_{T} du support est comprise entre 20 et 200 mm, de préférence entre 40 et 130 mm.

9. Utilisation d'un ruban adhésif selon l'une au moins des revendications précédentes, **caractérisée en ce que**
le support a un poids surfacique de 30 à 250 g/m², de préférence de 50 à 200 g/m², plus préférablement de 60 à 150 g/m².

10. Utilisation d'un ruban adhésif selon l'une au moins des revendications précédentes, **caractérisée en ce que**
un élément tissé, non-tissé ou maillé est utilisé comme support.

11. Ensemble de câbles enveloppé dans la direction axiale avec un ruban adhésif comprenant un support pourvu d'une face supérieure et d'une face inférieure, le support ayant une largeur B_{T} par rapport à la direction transversale, une bande adhésive étant pourvue, sur au moins un bord longitudinal du support, d'un adhésif réactif activable à la chaleur et ayant une largeur B_{K} égale au moins à 3 mm et au plus à 50 % de la largeur B_{T}, l'un des bords longitudinaux du ruban adhésif étant aligné sur le faisceau de câbles dans la direction axiale,
le ruban adhésif étant guidé suivant un mouvement circulaire autour du faisceau de câbles de sorte que le faisceau de câbles est recouvert par le ruban adhésif, l'autre bord longitudinal du ruban adhésif étant fixé au support par la bande adhésive comprenant un adhésif réactif activable à la chaleur de sorte que la bande adhésive adhère sensiblement au support,
un adhésif réactif activable à la chaleur, qui comprend du caoutchouc nitrile et de la résine phénolique, étant utilisé comme bande adhésive.
